# EUROPEAN PATENT APPLICATION

(11) **EP 4 822 065 A1**
(43) Date of publication of application: **14.10.2026**
(21) Application number: 24946567.5
(22) Date of filing: 13.09.2024
(51) Int. Cl.: C25D 1/04

(54) **ELECTROLYTIC COPPER FOIL AND PREPARATION METHOD THEREFOR, NEGATIVE ELECTRODE SHEET, AND SECONDARY BATTERY**

(71) Applicant: Jiujiang Defu Technology Co., Ltd, Jiujiang, Jiangxi 332000 (CN)
(72) Inventor: WEN, Min, Jiujiang, Jiangxi 332000 (CN); GE, Hongxin, Jiujiang, Jiangxi 332000 (CN); GONG, Xin, Jiujiang, Jiangxi 332000 (CN); JIANG, Zhong, Jiujiang, Jiangxi 332000 (CN); LI, Zilin, Jiujiang, Jiangxi 332000 (CN)
(74) Representative: Canzler & Bergmeier Patentanwälte Partnerschaft mbB
(86) International application number: PCT/CN2024/118885
(87) International publication number: WO 2026/055929

(57) **Abstract**

The present disclosure relates to an electrolytic copper foil, a preparation method thereof, a negative electrode plate, and a secondary battery. The electrolytic copper foil includes at least one copper layer. A proportional coefficient of columnar grains to equiaxed grains in a section of the copper layer along a thickness direction of the copper layer is denoted as T_{JM}, a maximum average of misorientation angles is denoted as KAMₘₐₓ, and a grain size is denoted as R. The section satisfies at least one of following conditions (1) to (3): (1) 0.2≤T_{JM}≤0.4; (2) KAMₘₐₓ≤5.5°; and (3) a proportion of grains with R≤0.3 µm is 40% to 50%, a proportion of grains with R≤0.4 µm is 70% to 80%, and a proportion of grains with R≤0.5 µm is greater than or equal to 95%. The electrolytic copper foil has high tensile strength, high elongation, and high thermal stability.

## Description

### FIELD OF DISCLOSURE

The present disclosure relates to the technical field of secondary batteries, in particular to an electrolytic copper foil, a preparation method thereof, a negative electrode plate, and a secondary battery.

### DESCRIPTION OF RELATED ARTS

With the rapid development of new energy technology, demand for high-performance secondary batteries is increasing. As a core of new energy storage technology, the lithium-ion battery cannot be improved in performance without high-quality electrode materials. Copper foils are often used as negative current collectors of the secondary batteries, which has an important influence on overall performance and safety of the batteries. Currently used copper foils mainly include calendered copper foils based on a calendering process and electrolytic copper foils based on an electroplating process. The calendered copper foils have high requirements in production technology, complex processes, and high cost, which is not suitable for large-scale production, and thus research focus is gradually shifted to the electrolytic copper foils. However, in order to meet the current requirements of high quality energy density of secondary batteries, the electrolytic copper foils should not only be thinner, but also have sufficient tensile and elongation performance and thermal stability. For existing electrolytic copper foils, their mechanical properties can no longer meet the requirements of high-quality energy density secondary batteries, and wrinkling and breakage often occur in the cold pressing process of a negative electrode plate or in winding or stacking of batteries and in the cycling process of the batteries, which greatly affects production efficiency and service life of the secondary batteries.

### SUMMARY OF THE PRESENT INVENTION

The present disclosure provides an electrolytic copper foil, a preparation method thereof, a negative electrode plate, and a secondary battery, which enables the electrolytic copper foil to have both high tensile strength and high elongation, and have high thermal stability.

In order to achieve the above objects, an electrolytic copper foil is provided in a first aspect of the disclosure, which includes at least one copper layer. A proportional coefficient of columnar grains to equiaxed grains in a section of the at least one copper layer along a thickness direction of the at least one copper layer is denoted as T_{JM}, and T_{JM}=N_{(I>1)}/N_{(I≤1)}, where N is the number of grains, I is a grain aspect ratio calculated for a fitted ellipse in electron back scatter diffraction (EBSD) grain size measurement data, and a maximum average of misorientation angles in the section is denoted as KAMₘₐₓ, and KAMₘₐₓ = Σ (Δφi)/n, where Δφi is a misorientation angle of a respective grain boundary, and n is a total number of grain boundaries, and a grain size in the section is denoted as R, wherein the section satisfies at least one of following conditions (1) to (3):
$0.2 \leq {T}_{JM} \leq 0.4 ;$ (1)
${KAM}_{max} \leq 5.5 ° ;$ (2) and
(3) a proportion of grains with R≤0.3 µm is 40% to 50%, a proportion of grains with R≤0.4 µm is 70% to 80%, and a proportion of grains with R≤0.5 µm is greater than or equal to 95%.

The electrolytic copper foil according to the present disclosure has both high tensile strength and high elongation, and has high thermal stability, and can effectively reduce the possibility of breakage and/or wrinkling during the manufacturing process of the electrolytic copper foil and/or the manufacturing and using process of the secondary battery.

In any of the embodiments of the present disclosure, the at least one copper layer has two surfaces opposite to each other in the thickness direction of the at least one copper layer, namely a first surface and a second surface, and the roughness and/or brightness of the first surface and the second surface are different from each other.

In any of the embodiments of the present disclosure, the electrolytic copper foil further includes at least one protective layer, and optionally, the at least one protective layer includes a first protective layer and a second protective layer, the first protective layer is arranged on the first surface, and the second protective layer is arranged on the second surface.

In any of the embodiments of the present disclosure, the protective layer includes at least one of chromium, glucose, and nitride.

Optionally, the protective layer contains chromium, and further optionally, a content of chromium in the at least one protective layer is 20 ppm to 80 ppm.

In any of the embodiments of the present disclosure, a thickness of the first protective layer is 100 nm to 300 nm, and/or a thickness of the second protective layer is 100 nm to 300 nm.

In any of the embodiments of the present disclosure, a thickness of the at least one copper layer is 4 µm to 8 µm.

In any of the embodiments of the present disclosure, the tensile strength of the electrolytic copper foil at room temperature is 60 kgf/mm² to 70 kgf/mm², and/or the elongation of the electrolytic copper foil at room temperature is larger than or equal to 4.5%, and the room temperature is 10°C to 40°C.

In any of the embodiments of the present disclosure, a degradation rate Rmi of the tensile strength of the electrolytic copper foil is less than or equal to 3.5%, and Rmi=(Rₘ₁-Rₘ₂)/Rₘ₁ *100%, where Rₘ₁ and Rₘ₂ are tensile strength of the electrolytic copper foil at room temperature and tensile strength of the electrolytic copper foil after heat treatment respectively, the room temperature is 10°C to 40°C, and temperature of the heat treatment is 100°C to 250°C.

A preparation method of the electrolytic copper foil is provided in a second aspect of the present disclosure, which includes:
placing an anode and a cathode to be plated in an electrolyte solution for electrolysis to obtain the electrolytic copper foil. The electrolyte solution includes copper ions, sulfuric acid, chloride ions, a leveling agent, a brightener, and a wetting agent.

Optionally, a concentration of the copper ions in the electrolyte solution is 70 g/L to 100 g/L.

Optionally, a concentration of the sulfuric acid in the electrolyte solution is 80 g/L to 140 g/L.

Optionally, a mass concentration of the chloride ions in the electrolyte solution is 10 ppm to 25 ppm.

Optionally, a mass concentration of the leveling agent in the electrolyte solution is 1 ppm to 15 ppm.

Optionally, a mass concentration of the brightener in the electrolyte solution is 10 ppm to 60 ppm.

Optionally, a mass concentration of the wetting agent in the electrolyte solution is 5 ppm to 20 ppm.

In any of the embodiments of the present disclosure, the leveling agent is a nitrogen-containing compound, optionally including one or more of gelatin, collagen, janus green, tetrahydrothiazolyl thione, and polyethyleneimine compounds.

The brightener is an organic divalent sulfide, optionally including one or more of sodium 3-mercapto-1-propanesulphonate, bis-(sodium sulfopropyl)-disulfide, bis(sodium 2-sulfoethyl sulfate)-disulfide, and 1,3-propanedisulfonic acid.

The wetting agent is a polyether compound, optionally including one or more of polyethylene glycol, hydroxyethyl cellulose, and polyvinyl pyrrolidone.

In any of the embodiments of the present disclosure, the temperature of the electrolyte solution during electrolysis is 50°C to 60°C.

In any of the embodiments of the present disclosure, the method further includes a step of passivating the electrolytic copper foil in a passivation solution.

Optionally, the passivation solution contains one or more of a chromium source, glucose, and nitride.

A negative electrode plate is provided in a third aspect of the present disclosure, which includes the electrolytic copper foil as described above or the electrolytic copper foil prepared by the method as described above.

A secondary battery is provided in a fourth aspect of the present disclosure, which includes the negative electrode plate as described above.

An electric device is provided in a fifth aspect of the present disclosure, which includes the at least one secondary battery as described above.

The electric device of this present disclosure includes the secondary battery according to the present disclosure, and thus at least has the same advantages as the secondary battery.

Details of one or more embodiments of the present disclosure are set forth in the following drawings and description. Other features, objects, and advantages of the present disclosure will be apparent from the description, drawings, and claims.

### BRIEF DESCRIPTION OF THE DRAWINGS

In order to better describe and illustrate the embodiments or examples provided by this present disclosure, reference can be made to one or more figures. Additional details or examples used to describe the drawings should not be considered as limiting the scope of any of the disclosed applications, currently described embodiments or examples, and best modes currently understood for these applications. Moreover, like parts are denoted by like reference numerals throughout the drawings. In the drawings:

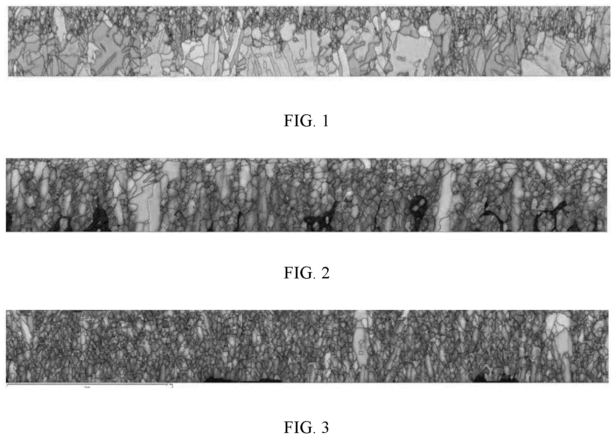

FIG. 1 is an EBSD photo of a section of an electrolytic copper foil of Embodiment 1 along its thickness direction;
FIG. 2 is an EBSD photo of a section of an electrolytic copper foil of Embodiment 2 along its thickness direction;
FIG. 3 is an EBSD photo of a section of an electrolytic copper foil of Embodiment 3 along its thickness direction.

### DETAILED DESCRIPTION OF THE PREFERRED EMBODIMENTS

Hereinafter, some embodiments of an electrolytic copper foil, a preparation method thereof, a negative electrode plate, a secondary battery, and an electrical device are described in detail with appropriate reference to the attached drawings. However, there may be a case where unnecessary detailed descriptions are omitted. For example, there are cases where detailed descriptions of well-known matters and repeated descriptions of an actually same structure are omitted. This is to avoid the following description from becoming unnecessarily lengthy and to facilitate understanding by those skilled in the art. In addition, the drawings and the following description are provided for full understanding of the disclosure by those skilled in the art, and are not intended to limit subject matters recorded in the claims.

A "range" provided in this disclosure can be defined in the form of a lower limit and an upper limit. A given range is defined by selecting a lower limit and an upper limit, and the selected lower limit and upper limit define boundaries of a special range. The range defined in this way can be inclusive or exclusive, and any of the end values can be independently included or excluded, and can be arbitrarily combined, that is, any of the lower limits can be combined with any of the upper limits to form a range. For example, if ranges from 60 to 120 and from 80 to 110 are listed for specific parameters, it is understood that ranges from 60 to 110 and from 80 to 120 are also expected. In addition, if the listed minimum range values are 1 and 2 and if the listed maximum range values are 3, 4, and 5, the following ranges can all be expected: 1 to 3, 1 to 4, 1 to 5, 2 to 3, 2 to 4, and 2 to 5. In this disclosure, unless otherwise specified, a numerical range "a to b" indicates an abbreviated representation of any combination of real numbers between A and B, where a and b are both real numbers. For example, a numerical range "0 to 5" indicates that all of the real numbers between "0 and 5" have been listed herein, and "0 to 5" is only an abbreviated representation of the combination of these numbers. In addition, when a parameter is an integer larger than or equal to 2, it is equivalent to listing the parameter as integers 2, 3, 4, 5, 6, 7, 8, 9, 10, 11, 12, etc. For example, when a parameter is an integer selected from "2 to 10", it is equivalent to listing integers 2, 3, 4, 5, 6, 7, 8, 9, and 10.

In this disclosure, "multiple" and "a plurality of" mean that the number is greater than or equal to 2 unless otherwise specified. For example, "one or more" means one or more than two.

Unless otherwise specified, all of the embodiments and alternative embodiments of this disclosure can be combined with each other to form a new technical scheme.

"Embodiment" herein means that a particular feature, structure, or characteristic described in combination with the embodiment can be included in at least one of the embodiments or implementations of the present disclosure. Occurrence of this phrase in various parts in the specification does not necessarily refer to the same embodiment, nor is it an independent or alternative embodiment mutually exclusive with other embodiments. It is understood explicitly and implicitly by those skilled in the art that the embodiments described herein can be combined with other embodiments. The "implementation" mentioned herein can be understood similarly.

It can be understood by those skilled in the art that in the methods of respective implementations or embodiments, a writing order of respective steps does not mean a strict execution order to constitute any restriction on an implementation process, and a detailed execution order of the respective steps should be determined according to their function and possible internal logic. Unless otherwise specified, all steps in this disclosure can be performed sequentially or randomly, preferably sequentially. For example, the method includes steps (a) and (b), which means that the method can include steps (a) and (b) performed in sequence, and can also include steps (b) and (a) performed in sequence. For example, the method can also involve step (c), which indicates that step (c) can be added to the method in any order. For example, the method can include these steps in an order of (a), (b) and (c), (a), (c) and (b), or (c), (a) and (b).

In this disclosure, in technical features or technical solutions described in words such as "containing", "comprising" and "including", unless otherwise specified, additional members other than listed members are not excluded, which can be regarded as providing both closed features or solutions composed of listed members and open features or solutions including additional members in addition to listed members. For example, A includes a1, a2, and a3, which may include other members or may not include additional members unless otherwise specified. It can be regarded as not only providing a feature or scheme of "A consists of a1, a2, and a3", but also a feature or scheme of "A includes not only a1, a2, and a3, but also other members". In this disclosure, unless otherwise specified, A (such as B) means that B is a non-limiting example of A, and it can be understood that A is not limited to B.

In this disclosure, "optionally" and "optional" mean that the feature in question may or may not be present, that is, any one of the two parallel schemes "presence" or "absence". If "optional" occurs at multiple sites in a technical scheme, respective "optional" items are independent of each other unless otherwise specified and with no contradictions or mutual constraints.

Copper foils with high tensile strength and high elongation can keep the good performance of the battery. However, at an existing technology level, the tensile strength is negatively correlated with the elongation, and thus it is difficult to achieve both of them, and it is difficult to improve the tensile strength and elongation at the same time. Meanwhile, it is faced with a problem that the physical properties of copper foils degrade greatly after high temperature aging, and thus it is very necessary to develop a new electrolytic copper foil to meet the requirements of high tensile strength, high elongation, and high thermal stability.

In order to achieve the above objects, an electrolytic copper foil is provided in a first aspect of the disclosure, which includes at least one copper layer. A proportional coefficient of columnar grains to equiaxed grains in a section of the copper layer along a thickness direction of the copper layer is denoted as T_{JM}, and a maximum average of misorientation angles in the section of the copper layer along the thickness direction is denoted as KAMₘₐₓ, and a grain size in the section of the copper layer along the thickness direction is denoted as R. The section of the copper layer along the thickness direction satisfies at least one of following conditions (1) to (3):
$0.2 \leq {T}_{JM} \leq 0.4 ;$ (1)
${KAM}_{max} \leq 5.5 ° ;$ (2) and
(3) a proportion of grains with R≤0.3 µm is 40% to 50%, a proportion of grains with R≤0.4 µm is 70% to 80%, and a proportion of grains with R≤0.5 µm is greater than or equal to 95%.

The electrolytic copper foil satisfying at least one of the above conditions (1) to (3) has both high tensile strength and high elongation, and has high thermal stability, and can effectively reduce the possibility of breakage and/or wrinkling during the manufacturing process of the electrolytic copper foil and/or the manufacturing and using process of the secondary battery.

The columnar grains and the equiaxed grains have well-known meanings in the art, which can be determined and measured by well-known methods in the art. For example, morphology of grains can be described by a fitted ellipse, in which a major axis and a minor axis of the ellipse correspond to a maximum dimension and a minimum dimension of a grain, and an aspect ratio of the fitted ellipse (that is, a ratio of the major axis to the minor axis) can be used to quantify morphological characteristics of the grain. For example, an aspect ratio of a columnar grain is usually greater than 1, while an aspect ratio of an equiaxed grain is close to 1. An aspect ratio of a fitted ellipse of the columnar grain is usually larger than an aspect ratio of a fitted ellipse of the equiaxed grain. Growth characteristics of the columnar grains lead to their significant growth in a specific direction, while their growth in other directions is limited. The aspect ratio of the fitted ellipse of the equiaxed grain is close to 1, which indicates that its growth is uniform in all directions.

The proportional coefficient of the columnar grains to the equiaxed grains in the section of the copper layer along the thickness direction is T_{JM}=N_{(I>1)}/N_{(I≤1)}, where N is the number of grains, I is a grain aspect ratio calculated for a fitted ellipse in EBSD grain size measurement data. T_{JM} can be obtained through well-known measurement methods in the art. For example, argon gas may be ionized, and the resulting ions were accelerated in an electric field to bombard the sample surface, so that material is removed by physical sputtering at a controlled rate via momentum transfer, thereby finely polishing the surface and obtaining a flat cross-sectional surface suitable for EBSD analysis. Backscattered electrons emitted from the surface of a crystalline sample are diffracted by the crystal lattice to form electron backscatter patterns (EBSPs), which reflect information on the crystallographic orientation. By means of fast image-analysis algorithms, EBSD can automatically acquire highly detailed orientation maps over large sample areas. By comparing the misorientation between adjacent EBSPs, EBSD can identify grain boundaries: if the misorientation between two neighboring regions exceeds a certain threshold (typically a few degrees), they are regarded as different grains. By mapping the crystallographic orientation over the sample surface, a grain-distribution map can be constructed. Analysis of this map allows the length and width of individual grains to be measured, from which the grain aspect ratio can be obtained. The section of the copper layer along the thickness direction has a ratio coefficient of columnar grains to equiaxed grains of 0.2 to 0.4, which indicates that the electrolytic copper foil has both high tensile strength and high elongation. As described below, in a case where the ratio coefficient T_{JM} of the columnar grains to the equiaxed grains on this section is less than 0.2, the electrolytic copper foil generally has more equiaxed grains, while the equiaxed grains exhibit isotropic crystal morphology with good plasticity and toughness. In the copper foil, growth of the equiaxed grains is usually accompanied by preferred <200> crystallographic orientation, and such crystal morphology facilitates improvement of the ductility of materials. Meanwhile, because the structure of the equiaxed grain is uniform, its growth is more conducive to improving twin grain boundary density of materials, which facilitates improvement of ductility but reduces the tensile strength. A crystal structure composed of more equiaxed grains has poor structural compactness and is more unstable during heat treatment of the copper foil, and thus physical properties of the copper foil change greatly. The copper foil may be deformed and thus wrinkled due to applied stress and heat during the manufacturing and use of batteries. In addition, in a case where the ratio coefficient T_{JM} of the columnar grains to the equiaxed grains on this section is greater than 0.4, columnar grains occupy more area of the copper foil, the crystal structure of the copper foil is too dense, and the copper foil becomes brittle, thus causing breakage and tearing during manufacturing and use of the batteries.

A maximum average of misorientation angles in the section of the copper layer along the thickness direction is denoted as KAMₘₐₓ = Σ (Δφi)/n, where Δφi is a misorientation angle of a respective grain boundary (i.e., the misorientation between the two adjacent grains forming that boundary), and n is the total number of grain boundaries. KAMₘₐₓ can be obtained by well-known measurement methods in the art. For example, EBSD is adopted to identify grain boundaries by analyzing crystallographic misorientation between adjacent regions. If the orientation difference between two regions exceeds a certain threshold (usually several degrees), the two regions can be considered as different grains separated by a grain boundary. This misorientation can be determined by comparing the crystallographic characteristics of EBSP. EBSD can measure a grain boundary misorientation angle, that is, the orientation difference between adjacent grains. Based on crystallographic orientation data obtained by EBSD, the misorientation angles between two adjacent grains at a grain boundary can be calculated, which is generally expressed in an Euler angle.

The maximum average of misorientation angles KAMₘₐₓ in the section of the copper layer along the thickness direction is less than or equal to 5.5, which indicates that the electrolytic copper foil has both high tensile strength and high elongation. Kernel average misorientation (KAM) is calculated for each measurement point using up to its 24 nearest neighbouring points in the kernel. It assigns a scalar value to each point, representing its local grain boundary misorientation. KAM can qualitatively reflect uniformity of plastic deformation: regions with higher KAM values indicate a higher degree of plastic deformation and/or a higher defect density. In plastic deformation of materials, uniform deformation facilitates improvement of tensile strength and elongation of the materials. In an area with a higher KAM value, stress is easier to concentrate due to larger plastic deformation, which increases the probability of crack nucleation and reduces the tensile strength and elongation of the materials. During deformation of the materials, the area with the higher KAM value indicates that the stability of the crystal structure is poor, which results in local plastic deformation or fracture of the materials more easily when it is subjected to a tensile force. The KAM value is also related to the recrystallization behavior of the materials. During a heating process after deformation, the area with the higher KAM value may be more prone to static recrystallization. During the static recrystallization, newly formed grains may grow up gradually, which results in uneven grain size distribution of the materials and reduces the strength and toughness of the materials. Especially in a case of long-term heat preservation at high temperature, secondary recrystallization may occur, forming a small amount of large-grain structure, which may further reduce the mechanical properties of the materials.

As described below, in a case where the maximum average of misorientation angles KAMₘₐₓ is greater than 5.5, crystal structure stability, tensile strength and elongation of the copper foil may be deteriorated, and high-temperature stability of the copper foil may be reduced, resulting in breakage and/or wrinkling in the manufacturing process of the electrolytic copper foil and/or in the manufacturing and using process of the secondary battery.

A grain size R in the section of the copper layer along the thickness direction is characterized by a diameter of an equivalent circle, which has a well-known meaning in the art. The diameter of a circle with an area equal to the projected area of the grain is the diameter of the equivalent circle, which can be measured by well-known methods in the art, such as EBSD measurement technology and single measurement.

A proportion of grains with a grain size R in the section of the copper layer along the thickness direction less than or equal to 0.3 µm reaches 40% to 50%, a proportion of grains with R≤0.4 µm reaches 70% to 80%, and a proportion of grains with R≤0.5 µm reaches greater than or equal to 95%, which can realize that the electrolytic copper foil has both high tensile strength and high elongation. The tensile strength of the copper foil increases with a decrease in the grain size. The tensile strength is closely related to the transfer of slip from a plastically deformed grain to adjacent grains, and whether this transfer can occur mainly depends on whether stress concentration generated by dislocation pile-ups near a grain boundary of the slipped grain can stimulate dislocation sources in a slip system of the adjacent grains to cause them to start moving and make coordinated multi-slip. Fine grains can produce more grain boundaries, and if the structure of the grain boundaries has not changed, a greater external force is needed to produce dislocation pile-ups at these boundaries, thus strengthening the materials. However, if the grain size becomes excessively small, the increase in grain boundary area means that boundaries act more strongly as obstacles to dislocation motion. Although this enhances the strength, the excessive number of grain boundaries can increase the brittleness of the material and reduce its plastic deformability. Conversely, if the grain size becomes too large, the grain-boundary density decreases and the strength is reduced; in particular, in the context of grain-refinement strengthening, an increase in grain size weakens this strengthening mechanism. Oversized grains are also detrimental to the fatigue life of the material, because cracks can more easily initiate and propagate within large grains.

As describe below, when the proportion of grains with the grain size R in the section of the copper layer along the thickness direction less than or equal to 0.3 µm is less than 40%, and/or the proportion of the grains with R≤0.4 µm is less than 70%, and/or the proportion of the grains with R≤0.5 µm is less than 95%, the copper foil is with a large overall grain size, an unstable crystal structure, and low tensile strength, and the tensile strength of the copper foil is seriously attenuated after heat treatment, and in a coating process of the secondary battery, the electrolytic copper foil may be broken due to a locally applied pressure. When the proportion of grains with the grain size R in the section of the copper layer along the thickness direction less than or equal to 0.3 µm is more than 50%, and/or the proportion of the grains with R≤0.4 µm is more than 80%, the copper foil is with a small overall grain size, the electrolytic copper foil is very brittle, has poor plasticity, and is easy to tear and break in a production process of the electrolytic copper foil and is easy to tear at a local bending position in a winding and manufacturing process of the negative electrode of the secondary battery.

The thickness of the copper layer has a meaning well known in the art, and can be measured by methods well known in the art. For example, the thickness of the copper foil is measured in an areal density method. The thickness of copper foil can be calculated via the following formula: Thickness of copper foil = Areal density of copper foil/Density of copper material. The areal density can be obtained by weighing a certain mass of a copper foil sample with a certain area (usually 10 cm*10 cm), while the density of the copper material can be obtained from a standard reference value (8.9g/cm³).

In some embodiments, the thickness of the copper layer is 4 µm to 8 µm, and it can be understood that the thickness of the copper layer can be 4 µm, 5 µm, 6 µm, 7 µm, 8 µm, and can be any value therebetween or can be in a range between any two numerical values between 4 µm and 8 µm. The thickness of the copper layer in this range can further improve the capacity of the battery.

In some embodiments, the at least one copper layer has two surfaces opposite to each other in the thickness direction of the at least one copper layer, namely a first surface and a second surface, and the roughness and/or brightness of the first surface and the second surface are different from each other, which can further improve the elongation of the copper foil. It can be understood that the vertical distance between the first surface and the second surface is the thickness of the copper layer.

In some embodiments, the electrolytic copper foil further includes at least one protective layer. Optionally, the at least one protective layer includes a first protective layer and a second protective layer. The first protective layer is arranged on the first surface, and the second protective layer is arranged on the second surface. The provision of the protective layer can effectively reduce oxidation on the surface of the electrolytic copper foil.

In some embodiments, the protective layer includes at least one of chromium, glucose, and nitride.

In some embodiments, the protective layer contains chromium, and further optionally, content of chromium in the at least one protective layer is 20 ppm to 80 ppm and can be any value therebetween or can be in a range between any two numerical values between 20 ppm and 80 ppm, such as 30 ppm, 40 ppm, 50 ppm, 60 ppm and 70 ppm.

In some embodiments, a thickness of the first protective layer is 100 nm to 300 nm, and/or a thickness of the second protective layer is 100 nm to 300 nm. It can be understood that the thickness of the first protective layer can be independently selected from 100 nm to 300 nm and may be any value therebetween or in a range between any two numerical values between 100 nm and 300 nm; for example, it can also be selected from 150 nm, 200 nm, and 250 nm. The thickness of the second protective layer can be independently selected from 100 nm to 300 nm and may be any value therebetween or in a range between any two numerical values between 100 nm and 300 nm; for example, it can also be selected from 150 nm, 200 nm, and 250 nm.

In some embodiments, the tensile strength of the electrolytic copper foil at room temperature is 60 kgf/mm² to 70 kgf/mm² and can be any value therebetween or can be in a range between any two numerical values between 60 kgf/mm² and 70 kgf/mm²; for example, it can also be 62 kgf/mm², 64 kgf/mm², 66 kgf/mm², and 68 kgf/mm². The room temperature is 10°C to 40°C.

In some embodiments, elongation of the electrolytic copper foil at room temperature is larger than or equal to 4.5%. The room temperature is 10°C to 40°C.

In some embodiments, a degradation rate Rmi of the tensile strength of the electrolytic copper foil is less than or equal to 3.5%, and Rmi=(Rₘ₁-Rₘ₂)/Rₘ₁ *100%, where Rₘ₁ and Rₘ₂ are tensile strength of the electrolytic copper foil at room temperature and tensile strength of the electrolytic copper foil after heat treatment respectively, the room temperature is 10°C to 40°C, and temperature of the heat treatment is 100°C to 250°C. In some embodiments, the heat treatment includes heating the electrolytic copper foil to 250°C at a rate of 5°C/min, performing heat treatment at 250°C for 2 hours, and then cooling to the room temperature (25°C) at a rate of 5°C/min. The degradation rate Rmi of the tensile strength of the electrolytic copper foil within this range can further reduce the risk of breakage and/or wrinkling during the manufacturing process of the electrolytic copper foil and/or the manufacturing and use process of the secondary battery.

The electrolytic copper foil may undergo high-temperature aging in a post-treatment process, and experience a long-term high-temperature process in a battery manufacturing process and during use of the secondary battery. High-temperature degradation of the tensile strength of the electrolytic copper foil has a great influence on these processes. The tensile strength of the copper foil after the heat treatment directly affects the performance of the copper foil as a negative current collector of a lithium-ion battery. The decreased tensile strength may result in a decrease in the mechanical stability of the battery during charging and discharging, which affects cycle life and safety of the battery. In the manufacturing process of the electrodes of the battery, the copper foil, as a current collector, needs to be laminated with other materials. The decreased tensile strength may affect adhesion between the copper foil and other materials, and then affect the overall performance of the electrodes. In the process of battery assembly, the decreased tensile strength of the copper foil also affects the structural stability of the battery. Fast degradation of the tensile strength of the copper foil may result in cracks or fractures in the process of battery assembly or use, and affect the reliability of the battery.

As described below, the degradation rate Rmi of the tensile strength of the electrolytic copper foil more than 3.5% may result in large difference in consistency of the tensile strength of the electrolytic copper foil during the manufacturing process of the electrolytic copper foil and/or during the manufacturing and using process of the secondary battery, increase a risk of breakage and deteriorated electrode performance, and cause a safety problem of the secondary battery.

A preparation method of the electrolytic copper foil is provided in a second aspect of the present disclosure, which includes:
placing an anode and a cathode to be plated in an electrolyte solution for electrolysis to obtain the electrolytic copper foil. The electrolyte solution includes copper ions, sulfuric acid, chloride ions, a leveling agent, a brightener, and a wetting agent.

In some embodiments, a concentration of the copper ions in the electrolyte solution is 70 g/L to 100 g/L/ and can be any value therebetween or can be in a range between any two numerical values between 70 g/L and 100 g/L, for example, it can also be 75 g/L, 80 g/L, 85 g/L, 90 g/L, and 95 g/L. When the concentration of the copper ions is within this range, the electrolysis can be carried out at high current density, and the electrolysis efficiency can be improved. When the concentration of the copper ions is excessively high, copper sulfate is easy to precipitate, and when the concentration of the copper ions is too low, the conductivity of the electrolyte is low, thus with reduced current density, resulting in low electrolysis efficiency.

In a process of preparing the electrolyte solution, a source of the copper ions can be copper salt, such as copper sulfate.

In some embodiments, a concentration of sulfuric acid in the electrolyte solution is 80 g/L to 140 g/L and can be any value therebetween or can be in a range between any two numerical values between 80 g/L and 140 g/L, for example, it can also be 90 g/L, 100 g/L, 110 g/L, 120 g/L, and 130 g/L. When the concentration of the sulfuric acid is too high, the solubility of the copper sulfate in the electrolyte solution decreases, and the copper sulfate is easy to crystallize and precipitate at the anode, which hinders the normal dissolution process of the anode and causes anode passivation. When the concentration of the sulfuric acid is too low, the anode is also easy to passivate. When the concentration of the sulfuric acid is within this appropriate range, electroplating is facilitated.

In some embodiments, a mass concentration of the chloride ions in the electrolyte solution is 10 ppm to 25 ppm and can be any value therebetween or can be in a range between any two numerical values between 10 ppm and 25 ppm, for example, it can also be 12 ppm, 15 ppm, 20 ppm, or 22 ppm. The chloride ions can reduce anode polarization, eliminate striping of the deposit in a high current density area, promote deposition of the copper ions, and increase cathode polarization, thus affecting the surface brightness of the electrolytic copper foil. The chloride ions can also react with Cu⁺, an intermediate product of copper electrodeposition, which is closely related to surface morphology and nodular defects of a copper coating. The concentration of the chloride ion within this range can further reduce surface roughness of the copper coating and reduce burr generation, and the copper coating has better leveling performance and brightness, and in addition, it can solve the problem of accelerated corrosion speed of equipment.

In the process of preparing the electrolyte solution, a source of the chloride ions can be hydrochloric acid, sodium chloride, or potassium chloride.

In some embodiments, a mass concentration of the leveling agent in the electrolyte solution is 1 ppm to 15 ppm and can be any value therebetween or can be in a range between any two numerical values between 1 ppm and 15 ppm, for example, it can also be 5 ppm, 8 ppm, 10 ppm, or 12 ppm. The leveling agent can smooth the micro-contour of the surface of the copper coating and reduce surface roughness. Optionally, the leveling agent is a nitrogen-containing compound, and further optionally the leveling agent includes one or more of gelatin, collagen, janus green, tetrahydrothiazolyl thione, and polyethyleneimine compounds.

In some embodiments, a mass concentration of the brightener in the electrolyte solution is 10 ppm to 60 ppm and can be any value therebetween or can be in a range between any two numerical values between 10 ppm and 60 ppm, for example, it can also be 20 ppm, 30 ppm, 40 ppm, or 50 ppm. The brightener can promote grain nucleation, produce the effect of refining grains, and achieve a brightening effect on the matte side of the copper foil. Optionally, the brightener is an organic divalent sulfide, and further optionally, the brightener includes one or more of sodium 3-mercapto-1-propanesulphonate (abbreviated as MPS), bis-(sodium sulfopropyl)-disulfide (abbreviated as SPS), bis(sodium 2-sulfoethyl sulfate)-disulfide (abbreviated as SES), and 1,3-propanedisulfonic acid (abbreviated as PDS).

In some embodiments, a mass concentration of the wetting agent in the electrolyte solution is 5 ppm to 20 ppm and can be any value therebetween or can be in a range between any two numerical values between 5 ppm and 20 ppm, for example, it can also be 8 ppm, 10 ppm, 12 ppm, 15 ppm, or 18 ppm. The wetting agent can reduce the surface tension of an electrode/solution interface, promote the escape of bubbles, and prevent the generation of pinholes and other defects. Meanwhile, the wetting agent can be directionally adsorbed on an electrode surface, which improves the cathodic polarization, inhibits the deposition rate of the copper ions, and makes crystallization of the coating more fine and compact.

The chloride ions have a synergistic effect with the leveling agent, the brightener, and the wetting agent, which jointly affect the crystal structure of the copper coating. Optionally, the wetting agent is a polyether compound, and further optionally the wetting agent includes one or more of polyethylene glycol (abbreviated as PEG), hydroxyethyl cellulose (abbreviated as HEC), and polyvinyl pyrrolidone(abbreviated as PVP).

In some embodiments, the temperature of the electrolyte solution during electrolysis is 50°C to 60°C.

In some embodiments, the anode is with a titanium substrate, and optionally, a surface of the titanium substrate may be provided with a noble metal coating, such as an iridium or tantalum coating.

In some embodiments, the cathode is a cathode roller, with a surface material being high-purity titanium.

In some embodiments, the method further includes a step of passivating the electrolytic copper foil in a passivation solution. Optionally, the passivation solution contains one or more of a chromium source, glucose, and nitride.

Further, in some embodiments, the method further includes one or more of the steps of stripping the plated copper layer from the cathode, washing with water, drying, coiling, and winding.

In addition, the secondary battery and the electric device according to the present disclosure will be described below as appropriate.

Normally, the secondary battery includes a positive electrode plate, a negative electrode plate, an electrolyte, and a separator. In a process of charging and discharging the battery, active ions shuttle between the positive electrode plate and the negative electrode plate by intercalation and deintercalation. The electrolyte functions in conducting ions between the positive electrode plate and the negative electrode plate. The separator is arranged between the positive electrode plate and the negative electrode plate, which mainly functions in preventing a short circuit between the positive electrode plate and the negative electrode plate while allowing ions to pass through.

### Positive electrode plate

The positive electrode plate includes a positive current collector and a positive active material layer provided on at least one surface of the positive current collector, and the positive active material layer includes a positive active material. For example, the positive current collector has two surfaces opposite to each other in a thickness direction of the positive current collector, and the positive active material layer is disposed on one or both of the two surfaces of the positive current collector.

In some embodiments, the positive current collector can be a metal foil or a composite current collector. For example, when the positive current collector is the metal foil, an aluminum foil can be used. The composite current collector may include a polymer base layer and a metal layer formed on at least one surface of the polymer base layer. The composite current collector can be obtained by forming a metal material on a polymer base. In the positive current collector, non-limiting examples of the metal material may include aluminum, aluminum alloy, nickel, nickel alloy, titanium, titanium alloy, silver, silver alloy, and the like. In the positive current collector, non-limiting examples of the polymer base may include polypropylene (PP), polyethylene terephthalate (PET), polybutylene terephthalate (PBT), polystyrene (PS), polyethylene (PE), etc.

In some embodiments, the positive active material can be a positive active material well known in the art for batteries.

It should be noted that the secondary battery of the present disclosure can be a lithium-ion battery or a sodium-ion battery.

As a non-limiting example of a lithium-ion battery, the positive active material may include one or more of the following materials: lithium-containing phosphate with an olivine structure, lithium transition metal oxide, and their respective modified compounds. However, the present disclosure is not limited to these materials, but also uses other conventional materials that can be used as positive active materials of the battery. One of these positive active materials may be used alone, or two or more of them may be used in combination. Examples of the lithium transition metal oxide may include, but are not limited to, lithium cobalt oxide (such as LiCoO₂), lithium nickel oxide, lithium manganese oxide, lithium nickel cobalt oxide, lithium nickel manganese oxide, lithium nickel cobalt manganese oxide, lithium nickel cobalt aluminum oxide, and modified compounds thereof. Non-limiting examples of the lithium-containing phosphate with the olivine structure may include, but are not limited to, lithium iron phosphate, composite materials of lithium iron phosphate and carbon, lithium manganese phosphate, composite materials of lithium manganese phosphate and carbon, lithium manganese iron phosphate, and composite materials of lithium manganese iron phosphate and carbon. Non-limiting examples of the lithium cobalt oxide may include LiCoO₂; non-limiting examples of the lithium nickel oxide may include LiNiO₂; non-limiting examples of lithium manganese oxide may include LiMnO₂, LiMn₂O₄ and the like; non-limiting examples of the lithium nickel cobalt manganese oxide may include LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁). Non-limiting examples of lithium nickel cobalt aluminum oxide may include LiNi_{0.8}Co_{0.15}Al_{0.05}O₂.

A positive active material of the sodium-ion battery may include at least one or more of the following: sodium transition metal oxide, polyanionic compounds, and Prussian blue analogs. However, the present disclosure is not limited to these materials, and other conventional known materials that can be used as a positive active material of the sodium-ion battery can also be used.

As an optional technical scheme, in the sodium transition metal oxide, the transition metal can include at least one or more of Mn, Fe, Ni, Co, Cr, Cu, Ti, Zn, V, Zr, and Ce. A non-limiting example of the sodium transition metal oxide may be NaxMO2, where M is one or more of Ti, V, Mn, Co, Ni, Fe, Cr, and Cu, and 0 < x ≤ 1.

As a non-limiting example of the sodium-ion battery, the positive active material may include one or more of the following: sodium transition metal oxide, polyanionic compounds, and Prussian blue analogs. However, the present disclosure is not limited to these materials, and other conventional known materials that can be used as a positive active material of the sodium-ion battery can also be used.

In some embodiments, the positive active material layer also optionally includes a binder. As a non-limiting example, the binder may include one or more of polyvinylidene difluoride (PVDF), polytetrafluoroethylene (PTFE), vinylidene difluoride-tetrafluoroethylene-propylene terpolymer, vinylidene difluoride-hexafluoropropylene-tetrafluoroethylene terpolymer, tetrafluoroethylene-hexafluoropropylene copolymer, and fluorine-containing acrylate resin.

In some embodiments, the positive active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate can be prepared in the following manner: above components for preparing the positive electrode plate, such as the positive active material, the conductive agent, the binder and any other components, are dispersed in a solvent to form a positive electrode slurry; and the positive electrode slurry is coated on at least one surface of the positive current collector, followed by processes such as drying and cold pressing to obtain the positive electrode plate. Types of the solvent can be selected from, but not limited to, any of the above embodiments, such as N-methylpyrrolidone (NMP). The positive electrode slurry can be coated on a single surface of the positive current collector or both surfaces of the positive current collector. A solid content of the positive electrode slurry can be 40wt% to 80wt%. Viscosity of the positive electrode slurry at room temperature can be adjusted to 5000 mPa·s to 25000 mPa·s. When coating the positive electrode slurry, a coating areal density can be 15 mg/cm² to 35 mg/cm², expressed on a dry weight basis (excluding solvent). Compaction density of the positive electrode plate can be 3.0 g/cm³ to 3.6 g/cm³, optionally 3.3 g/cm³ to 3.5 g/cm³.

### Negative electrode plate

The negative electrode plate includes a negative current collector and a negative active material layer provided on at least one surface of the negative current collector, and the negative active material layer includes a negative active material. For example, the negative current collector has two surfaces opposite to each other in a thickness direction of the negative current collector, and the negative active material layer is disposed on one or both of the two surfaces of the negative current collector.

In this disclosure, the negative current collector adopts the electrolytic copper foil in the first aspect of this disclosure or the electrolytic copper foil prepared by the method in the second aspect of this disclosure. In some embodiments, the negative active material can be a negative active material well known in the art for batteries. As a non-limiting example, the negative electrode active material may include one or more of the following: artificial graphite, natural graphite, soft carbon, hard carbon, a silicon-based material, a tin-based material, lithium titanate, and the like. The silicon-based material can include one or more of silicon, a silicon-oxygen compound, a silicon-carbon composite, a silicon-nitrogen composite, and a silicon alloy. The tin-based material may include at least one of tin, a tin-oxygen compound, and a tin alloy. However, the present disclosure is not limited to these materials, but also uses other conventional materials that can be used as negative active materials of the battery. One of these negative active materials may be used alone, or two or more of them may be used in combination.

In some embodiments, the negative active material layer also optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative active material layer further optionally includes other promoters such as a thickener (for example, sodium carboxymethyl cellulose (CMC-Na)).

In some embodiments, the negative electrode plate may be prepared in the following manner: above components for preparing the negative electrode plate, such as the negative active material, the conductive agent, the binder and any other components, are dispersed in a solvent (as a non-limiting example of the solvent, such as deionized water) to form a negative electrode slurry; and the negative electrode slurry is coated on at least one surface of the negative current collector, followed by processes such as drying and cold pressing to obtain the negative electrode plate. The negative electrode slurry can be coated on a single surface of the negative current collector or both surfaces of the negative current collector. A solid content of the negative electrode slurry can be 40wt% to 60wt%. Viscosity of the negative electrode slurry at room temperature can be adjusted to 2000 mPa·s to 10000 mPa·s. When coating the negative electrode slurry, a coating areal density can be 75 mg/cm² to 220 g/cm², expressed on a dry weight basis (excluding solvent). The compaction density of the negative electrode plate can be 1.0 g/cm³ to 1.8 g/cm³.

### Electrolyte

The electrolyte conducts ions between the positive electrode plate and the negative electrode plate. The electrolyte is not specifically limited to any particular type in this disclosure, and may be selected as desired. For example, the electrolyte may be in a liquid state, a gel state, or an all-solid state.

In some embodiments, the electrolyte is an electrolyte solution. The electrolyte solution includes an electrolyte salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulphonyl)imide (LiTFSI), lithium trifluoromethanesulfonate (LiTFS), lithium difluorophosphate (LiPO₂F₂), lithium difluoro(oxalato)borate (LiDFOB), lithium bis(oxalate)borate (LiBOB), lithium difluoro(bisoxalato)phosphate (LiDFOP), and lithium tetrafluoro(oxalate)phosphate (LiTFOP).

In some embodiments, the solvent may include one or more of ethylene carbonate (EC, 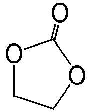 ), propylene carbonate (PC, 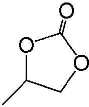 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 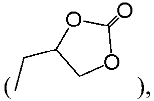 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone (gamma butyrolactone), sulfolane, dimethyl sulfone, ethyl methylsulfonate, and diethyl sulfone.

In some embodiments, the electrolyte solution further optionally includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance, low-temperature performance of the battery, or the like.

In some embodiments, the additive in the electrolyte may include, but is not limited to, one or more of fluoroethylene carbonate (FEC), di-fluoroethylene carbonate (DFEC), trifluoropropylene carbonate (TFPC), and the like.

### Separator

In some embodiments, the secondary battery further includes a separator. In this disclosure, the separator is not specifically limited to any particular type, and any known porous-structure separator with good chemical stability and mechanical stability can be selected.

In some embodiments, a material of the separator may include at least one of glass fiber, non-woven fabric, polyethylene, polypropylene, and polyvinylidene difluoride. The separator may be a single-layer film or a multi-layer composite film, which is not specifically limited. When the separator is a multi-layer composite film, respective layers may be made of the same or different materials, which is not specifically limited.

In some embodiments, a thickness of the separator is 6 µm to 40 µm, optionally 12 µm to 20 µm.

In some embodiments, the positive electrode plate, the negative electrode plate, and the separator may be wound or laminated to form an electrode assembly.

In some embodiments, the secondary battery may include an outer package. The outer package may be used to package the electrode assembly and the electrolyte.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, and further, a non-limiting example of the plastic may be one or more of polypropylene, polybutylene terephthalate, and polybutylene succinate.

The secondary battery includes at least one battery cell. The secondary battery may include one or more battery cells.

In this disclosure, unless otherwise specified, the expression "battery cell" refers to a basic unit that can realize the mutual conversion of chemical energy and electric energy, and further, it generally includes at least a positive electrode plate, a negative electrode plate, and an electrolyte. In a process of charging and discharging of the battery, active ions shuttle between the positive electrode plate and the negative electrode plate, being repeatedly intercalated into and deintercalated from them. The electrolyte functions in conducting active ions between the positive electrode plate and the negative electrode plate.

The shape of the battery cell is not particularly limited in this disclosure, and it can be cylindrical, square, or any other shape.

In some embodiments, the outer package may include a housing and a cover plate. The housing can include a bottom plate and a side plate connected to the bottom plate, and the bottom plate and the side plate form an accommodating cavity. The housing has an opening communicated with the accommodating cavity, and the cover plate can cover the opening to close the accommodating cavity. The positive electrode plate, the negative electrode plate, and the separator can be wound or laminated to form an electrode assembly. The electrode assembly is placed in the accommodating cavity. The electrolyte solution immerses the electrode assembly. A battery cell can contain one or more electrode assemblies, which can be selected by those skilled in the art according to actual needs.

The secondary battery may be a battery module or a battery pack.

The battery module includes at least one battery cell. The battery module can contain one or more battery cells, and an appropriate number can be selected by those skilled in the art according to the application and capacity of the battery module.

In some embodiments, the battery module can also be assembled into a battery pack, and the battery pack can contain one or more battery modules, and an appropriate number can be selected by those skilled in the art according to the application and capacity of the battery pack.

In addition, an electric device is further provided in the present disclosure, which includes the secondary battery according to the present disclosure. The secondary battery can be used as a power source for an electric device or as an energy storage unit of the electric device. The electric device can include a mobile device, an electric vehicle, an electric train, a ship, satellites, an energy storage system, etc., which is not limited thereto. The mobile device can be, for example, a mobile phone, a notebook computer, etc. The electric vehicle can be, for example, a battery electric vehicle, a hybrid electric vehicle, a plug-in hybrid electric vehicle, an electric bicycle, an electric scooter, an electric golf vehicle, or an electric truck, etc., which is not limited thereto.

For the electric device, the secondary battery can be selected according to its use requirements.

For example, the electric device may be a battery electric vehicle, a hybrid electric vehicle, or a plug-in hybrid electric vehicle. In order to meet the requirements of the electric device for high power and high energy density of the secondary battery, a battery pack or a battery module can be adopted.

As another example, the electric device may be a mobile phone, a tablet computer, a notebook computer, etc. This device is usually required to be light and thin, and the secondary battery may be used as a power source.

### Embodiments

Embodiments of the present disclosure will be described in the following. The embodiments described below are exemplary and are only used to explain the present disclosure, and should not be construed as limiting the present disclosure. For parts of the embodiments which are not specified in terms of technology or conditions, they are carried out according to technology or conditions described in the literature in this art or according to the product specification. For reagents or instruments used which are not specified in terms of manufacturer, they are all conventional products commercially available on the market.

### Embodiment 1

### 1) Preparation of electrolyte solution

Copper sulfate, sulfuric acid, sodium chloride, the leveling agent, the brightener and the wetting agent were dissolved in water, fully stirred and mixed evenly, and concentrations of respective components were respectively as follows: 80 g/L of copper ions, 110 g/L of sulfuric acid, 13 ppm of chloride ions, 45 ppm of MPS (sodium 3-mercapto-1-propanesulphonate), 35 ppm of SPS (bis-(sodium sulfopropyl)-disulfide), 7 ppm of gelatin, 10 ppm of tetrahydrothiazolyl thione and 14 ppm of HEC (hydroxyethyl cellulose).

### 2) Electrolysis

An anode plate and a cathode roller to be plated were immersed into the electrolyte solution described above, with a temperature of the electrolyte solution of 50°C and a flow rate of the electrolyte solution of 40 m³/h. The cathode roller rotated at a constant speed, and copper in the solution was deposited on the surface of the cathode roller to form a copper foil. The thickness of the copper foil was controlled by the cathode current density and the rotating speed of the cathode roller. A copper foil with a target thickness was obtained by those skilled in the art by controlling the current density and the rotating speed of the cathode roller through conventional methods. The copper foil was continuously peeled from the cathode roller after the copper foil was rolled out of the electrolyte solution with a drum, which was then subjected to washing, drying, coiling, and winding to generate the electrolytic copper foil.

### Embodiments 2 to 7

These embodiments are substantially the same as Embodiment 1, except that relevant parameters in the electrolysis process are adjusted, which can be specifically referred to Table 1.

### Comparative Embodiments 1-8

These embodiments are substantially the same as Embodiment 1, except that relevant parameters in the electrolysis process are adjusted, which can be specifically referred to Table 1.

### Test section

1) Tests of T_{JM} (with the same meaning as above), KAMₘₐₓ (with the same meaning as above), and R (with the same meaning as above) of electrolytic copper foil

By using an electron backscatter diffraction (EBSD) method, relevant microstructures of samples of respective embodiments and comparative embodiments were observed by using a C-Swift EBSD detector manufactured by Oxford Instruments, and then values of the T_{JM}, KAMₘₐₓ, and R of respective embodiments and comparative embodiments were obtained through relevant data obtained by this method and relevant calculation formulas. The samples were sections of electrolytic copper foils along their thickness direction.

### 2) Tensile strength and elongation test of electrolytic copper foil

A HY-0230 universal material testing machine manufactured by Shanghai Hengyi Precision Instrument Co., Ltd. was used to test the tensile strength at room temperature of the copper foil at a room temperature condition (at about 25°C), tensile strength after heat treatment, and elongation of the copper foil according to the testing method of GB/T29847-2013. The heat treatment involves heating the electrolytic copper foil to 250°C at a rate of 5°C/min, performing heat treatment at 250°C for 2 hours, and then cooling to the room temperature (25°C) at a rate of 5°C/min, with Rmi= (Rₘ₁-Rₘ₂)/Rₘ₁ *100%, where Rₘ₁ and Rₘ₂ are tensile strength of the electrolytic copper foil at room temperature and tensile strength of the electrolytic copper foil after heat treatment, respectively.

**Table 1**

| | MPS (ppm) | SPS (pp m) | Gelati n (ppm) | Tetrah ydrothi azolyl thione (ppm) | HEC (ppm ) | T_{JM} | KA M_{ma x} (°) | Proport ion of grains with R≤0.3 µm (%) | Proport ion of grains with R≤0.4 µm (%) | Proport ion of grains with R≤0.5 µm (%) | R_{m i}% | Tensile strengt h at room temper ature (kgf/m m²) | Elo ngat ion (%) |
|---|---|---|---|---|---|---|---|---|---|---|---|---|---|
| Embodi ment 1 | 45 | 35 | 7 | 10 | 14 | 0.25 | 3.9 | 41.4 | 72.2 | 96.2 | 2. 3 | 62.0 | 4.81 |
| Embodi ment 2 | 40 | 45 | 5 | 11 | 12 | 0.29 | 4.2 | 43.5 | 73.6 | 95.8 | 2. 6 | 63.9 | 5.07 |
| Embodi ment 3 | 45 | 35 | 7 | 10 | 14 | 0.32 | 3.8 | 44.2 | 74.9 | 96.4 | 1. 8 | 65.4 | 5.36 |
| Embodi ment 4 | 50 | 30 | 8 | 12 | 10 | 0.2 | 3.5 | 48.5 | 78.7 | 97.8 | 1. 0 | 65.3 | 5.54 |
| Embodi ment 5 | 40 | 40 | 6 | 8 | 18 | 0.4 | 5.4 | 40.1 | 70.6 | 95.3 | 3. 2 | 62.3 | 5.42 |
| Embodi ment 6 | 55 | 25 | 8 | 11 | 11 | 0.30 | 5.5 | 45.3 | 75.4 | 96.1 | 3. 3 | 67.4 | 4.83 |
| Embodi ment 7 | 60 | 20 | 9 | 13 | 12 | 0.24 | 3.5 | 50.34 | 79.6 | 97.2 | 2. 6 | 66.3 | 5.82 |
| Compar ative Embodi ment 1 | 60 | 20 | 12 | 13 | 10 | 0.18 | 2.2 | 46.3 | 75.5 | 96.3 | 4. 2 | 57.4 | 5.21 |
| Compar ative Embodi ment 2 | 30 | 50 | 8 | 9 | 13 | 0.42 | 3.3 | 36 | 72 | 93.5 | 3. 3 | 55.4 | 6.20 |
| Compar ative Embodi ment 3 | 40 | 40 | 11 | 15 | 9 | 0.33 | 5.6 | 35.8 | 75.4 | 94.3 | 3. 1 | 61.3 | 3.94 |
| Compar ative Embodi ment 4 | 45 | 40 | 11 | 15 | 9 | 0.30 | 5.4 | 38 | 69.8 | 93.2 | 3. 2 | 59.4 | 4.26 |
| Compar ative Embodi ment 5 | 70 | 10 | 12 | 15 | 8 | 0.24 | 4.2 | 52 | 81.3 | 94.5 | 5. 3 | 63.4 | 3.98 |
| Compar ative Embodi ment 6 | 40 | 60 | 13 | 14 | 9 | 0.37 | 4.7 | 45 | 68.3 | 89.7 | 3. 8 | 57.9 | 5.32 |
| Compar ative Embodi ment 7 | 75 | 10 | 13 | 14 | 8 | 0.27 | 4.4 | 46.3 | 82.3 | 95.3 | 3. 6 | 56.4 | 4.78 |
| Compar ative Embodi ment 8 | 75 | 5 | 14 | 15 | 10 | 0.15 | 3.2 | 52.3 | 83.3 | 94 | 5. 3 | 63.3 | 3.82 |

The above description of various embodiments tends to emphasize differences between respective embodiments, and their same or similar parts can be referred to each other and will not be repeated for brevity.

It should be noted that this disclosure is not limited to the above embodiments. The above embodiments are only examples, and the embodiments that have the same structure and play the same role and effect within the scope of the technical scheme of this disclosure are all included in the technical scope of this disclosure. In addition, other embodiments constructed by applying various modifications to the embodiments and combining some constituent elements of the embodiments within the scope not departing from the principle of the disclosure are also included in the scope of the disclosure.

## Claims

1. An electrolytic copper foil, comprising at least one copper layer, wherein a proportional coefficient of columnar grains to equiaxed grains in a section of the at least one copper layer along a thickness direction of the at least one copper layer is denoted as T_{JM}, and T_{JM}=N_{(I>1)}/N_{(I≤1)}, wherein N is the number of grains, I is a grain aspect ratio calculated for a fitted ellipse in electron back scatter diffraction (EBSD) grain size measurement data, and a maximum average of misorientation angles in the section is denoted as KAMₘₐₓ, and KAMₘₐₓ = Σ (Δφi)/n, wherein Δφi is a misorientation angle of a respective grain boundary, and n is the total number of grain boundaries, and a grain size in the section is denoted as R, wherein the section satisfies at least one of following (1) to (3): $0.2 \leq {T}_{JM} \leq 0.4 ;$ (1) ${KAM}_{max} \leq 5.5 ° ;$ (2) and
(3) a proportion of grains with R≤0.3 µm is 40% to 50%, a proportion of grains with R≤0.4 µm is 70% to 80%, and a proportion of grains with R≤0.5 µm is greater than or equal to 95%.

2. The electrolytic copper foil according to claim 1, wherein the at least one copper layer has two surfaces opposite to each other in the thickness direction of the at least one copper layer, the two surfaces are a first surface and a second surface, respectively, and roughness and/or brightness of the first surface and the second surface are different from each other.

3. The electrolytic copper foil according to claim 2, further comprising at least one protective layer, wherein the at least one protective layer comprises a first protective layer and a second protective layer, the first protective layer is arranged on the first surface, and the second protective layer is arranged on the second surface.

4. The electrolytic copper foil according to claim 3, wherein the protective layer comprises at least one of chromium, glucose, and nitride;
preferably, the protective layer contains chromium, and further preferably, a content of chromium in the at least one protective layer is 20 ppm to 80 ppm.

5. The electrolytic copper foil according to claim 3, wherein a thickness of the first protective layer is 100 nm to 300 nm, and/or a thickness of the second protective layer is 100 nm to 300 nm.

6. The electrolytic copper foil according to claim 1, wherein a thickness of the at least one copper layer is 4 µm to 8 µm.

7. The electrolytic copper foil according to any one claims 1 to 6, wherein a tensile strength of the electrolytic copper foil at room temperature is 60 kgf/mm² to 70 kgf/mm², and/or an elongation of the electrolytic copper foil at room temperature is larger than or equal to 4.5%, and the room temperature is 10°C to 40°C.

8. The electrolytic copper foil according to any one claims 1 to 6, wherein an degradation rate Rmi of a tensile strength of the electrolytic copper foil is less than or equal to 3.5%, and Rmi=(Rₘ₁-Rₘ₂) /Rₘ₁ *100%, wherein Rₘ₁ and Rₘ₂ are tensile strength of the electrolytic copper foil at room temperature and tensile strength of the electrolytic copper foil after heat treatment, respectively, the room temperature is 10°C to 40°C, and temperature of the heat treatment is 100°C to 250°C.

9. A preparation method of an electrolytic copper foil, comprising:
placing an anode and a cathode to be plated in an electrolyte solution for electrolysis to obtain the electrolytic copper foil, the electrolyte solution comprises copper ions, sulfuric acid, chloride ions, a leveling agent, a brightener, and a wetting agent; wherein
a concentration of the copper ions in the electrolyte solution is 70 g/L to 100 g/L;
a concentration of the sulfuric acid in the electrolyte solution is 80 g/L to 140 g/L;
a mass concentration of the chloride ions in the electrolyte solution is 10 ppm to 25 ppm;
a mass concentration of the leveling agent in the electrolyte solution is 1 ppm to 15 ppm;
a mass concentration of the brightener in the electrolyte solution is 10 ppm to 60 ppm; and
a mass concentration of the wetting agent in the electrolyte solution is 5 ppm to 20 ppm.

10. The preparation method of the electrolytic copper foil according to claim 9, wherein the leveling agent is a nitrogen-containing compound, preferably comprising one or more of gelatin, collagen, janus green, tetrahydrothiazolyl thione, and polyethyleneimine compounds; and/or
the brightener is an organic divalent sulfide, preferably comprising one or more of sodium 3-mercapto-1-propanesulphonate, bis-(sodium sulfopropyl)-disulfide, bis(sodium 2-sulfoethyl sulfate)-disulfide, and 1,3-propanedisulfonic acid; and/or
the wetting agent is a polyether compound, preferably comprising one or more of polyethylene glycol, hydroxyethyl cellulose, and polyvinyl pyrrolidone.

11. The preparation method of the electrolytic copper foil according to claim 9, wherein a temperature of the electrolyte solution during the electrolysis is 50°C to 60°C.

12. The preparation method of the electrolytic copper foil according to claim 9, further comprising a step of passivating the electrolytic copper foil in a passivation solution,
wherein the passivation solution comprises one or more of a chromium source, glucose, and nitride.

13. A negative electrode plate, comprising the electrolytic copper foil according to any one of claims 1 to 8, or an electrolytic copper foil prepared by the preparation method of the electrolytic copper foil according to any one of claims 9 to 12.

14. A secondary battery, comprising the negative electrode plate according to claim 13.

15. An electric device, comprising the at least one secondary battery according to claim 14.
